(19) Europäisches Patentamt
European Patent Office
Office européen des brevets

(11) **EP 2 983 105 B1**

(12) **EUROPEAN PATENT SPECIFICATION**

(45) Date of publication and mention
of the grant of the patent:
**02.10.2019  Bulletin 2019/40**

(51) Int Cl.:
*G06F 21/79* *(2013.01)*     *G06F 3/06* *(2006.01)*

(21) Application number: **15179992.1**

(22) Date of filing: **06.08.2015**

(54) **ELECTRONIC DEVICE, ON-CHIP MEMORY AND METHOD OF OPERATING THE ON-CHIP MEMORY**

ELEKTRONISCHE VORRICHTUNG, ON-CHIP-SPEICHER UND VERFAHREN ZUM BETRIEB DES ON-CHIP-SPEICHERS

DISPOSITIF ÉLECTRONIQUE, MÉMOIRE SUR PUCE ET PROCÉDÉ DE FONCTIONNEMENT DE LA MÉMOIRE SUR PUCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **08.08.2014  KR 20140102481**

(43) Date of publication of application:
**10.02.2016  Bulletin 2016/06**

(73) Proprietor: **Samsung Electronics Co., Ltd. Gyeonggi-do 16677 (KR)**

(72) Inventors:
• **Hwang, Chanyoung**
  **Gyeonggi-do 16677 (KR)**
• **Yang, Seungjin**
  **Gyeonggi-do 16677 (KR)**

(74) Representative: **Nederlandsch Octrooibureau P.O. Box 29720 2502 LS The Hague (NL)**

(56) References cited:
**US-A1- 2003 101 307     US-A1- 2014 215 177 US-B1- 7 177 985**

**Description**

**TECHNICAL FIELD**

The present disclosure relates to an electronic device, an on-chip memory and a method of operating the on-chip memory, and more particularly to a chip memory in which an application processor, a communication processor and a memory are mounted on one chip and a method of operating the same.

**BACKGROUND**

In a mobile environment, an Application Processor (AP) is being widely used in a mobile device such as a smart phone and a tablet device. Competition for high performance, diversification of functions, and miniaturization of a size of a mobile device has become intense. In line with this competition, efforts for reducing a size and a cost are continually being made by including a Communication Processor (CP), which is formed as an additional chip and connected to the AP, in the AP.

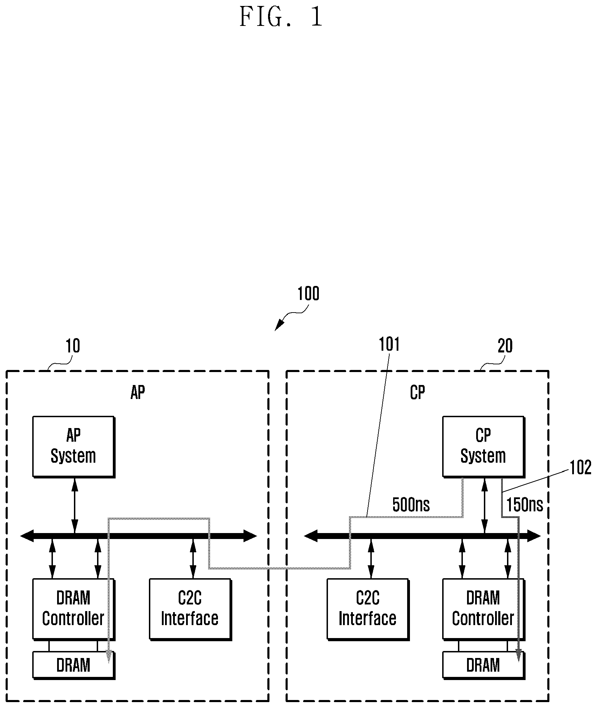

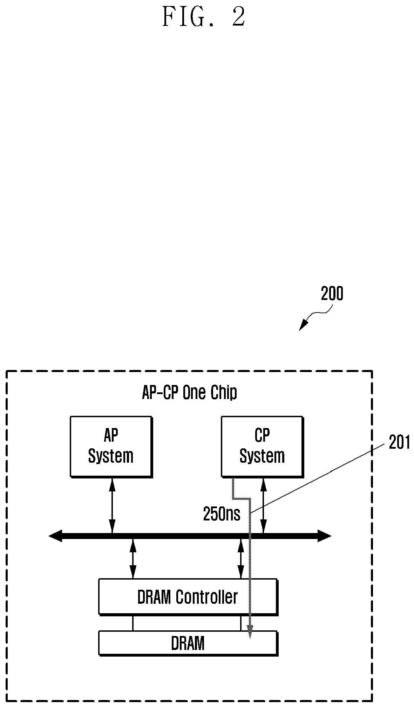

FIGs. 1 and 2 are views illustrating an AP-CP connection structure.

Referring to FIGs. 1 and 2, in an AP-CP one chip 200, a memory latency increases compared to a previous case in which an AP 10, a CP 20 and individual chip 100 are used, and thus it is difficult to secure a real time. First, in the AP-CP one chip 200, a memory latency of the CP itself increases. Due to an operation of transferring communication data processed by the CP from a CP area to an AP area performed by a Direct Memory Access (DMA), a reduction of a latency of a path, from a path 101 to a path 201, does not influence a performance. However, an increase of a DRAM access latency of a CP Central Processing Unit (CPU), from a path 102 to a path 201 influences a communication data process speed. Specially, when the CPU of the CP controls hardware (H/W), since a real time process is required, a limit condition is generated in latency, and when latency is longer than that of the limit condition, communication may not be performed.

In addition, when M/M traffic of the AP is generated, DRAM latency is increased, and a memory latency of the CP is also increased. Currently, in an environment in which an average latency of a memory of the CP is 200 ns and a maximum latency of the memory of the CP is 400 ns, a downlink corresponds to about 300 Mbps. However, when the M/M traffic of the AP is generated, it is expected that an average latency of a memory of the path 201 is increased to 500 ns or more and a maximum latency of the memory of the path 201 is increased to 1000 ns or more, and thus it is difficult to achieve 300 Mbps in a downlink.

In the CP, in order to reduce a memory latency, traditionally, a Tightly Coupled Memory (TCM) and a cache has been used. Each of a CPU and a Digital Signal Processor (DSP) include a level 1 cache and the TCM in a processor and the CPU uses a level 2 cache as an additional design Intellectual Property (IP) to reduce latency.

In the AP, traditionally, in order to secure latency QoS of a transaction of a specific IP, a priority based QoS has been applied to and used for a bus and a DRAM controller. When this method is used, latency of a transaction, of which a priority is low, increases and a whole throughput of a DRAM is reduced. In the AP, latency is secured by increasing a priority for traffic required to be processed in real time like a display IP.

Traditionally, a cache is closely located to a processor and reduces an average memory access time according to a hit rate probability. A recently noticed system cache is a resource which is shared and used by all IPs in a system, and much research concerning the system cache is being progressed.

Prior art document US-2003/0101307-A1 discloses macro-cells that can be developed by a user or bought on the market as Intellectual Properties (IP). Those macros cores are predefined portable logic blocks.

Prior art document US-7177985-B1 discloses a microprocessor with multiple stream prefetch engines each executing a stream prefetch instruction to prefetch a complex data stream specified by the instruction in a manner synchonised with program execution of loads from the stream.

**SUMMARY**

To address the above-discussed deficiencies, it is a primary object to provide an on-chip memory, in which an application processor, a communication processor and a memory are mounted on one chip, an electronic device and a method of operating the on-chip memory.

Another aspect of the present disclosure is to provide an on-chip memory, an electronic device and a method of operating the on-chip memory for securing an Intellectual Property (IP) real time process of a design IP.

Another aspect of the present disclosure is to provide an on-chip memory, an electronic device and a method of operating the on-chip memory, which hide latency of a memory outside a processor, such as a DRAM, with respect to a real time IP, provide fixed memory latency, and thus provide stability to communication and display.

According to an aspect of the present disclosure, an on-chip memory comprise: a plurality of design Intellectual Property(IPs); a memory that includes a storage area, and a processor connected to the memory and is configured to monitor a memory traffic of at least one IP among the plurality of design IPs and control usage of a storage area based on a result of the monitoring.

According to another aspect of the present disclosure, a method of operating an on-chip memory including a plurality of design Intellectual Property (IPs) comprises: monitoring a memory traffic of at least one IP among the plurality of design IPs; and controlling usage of a storage area included in the on-chip memory based on a result of the monitoring.

According to another aspect of the present disclosure, an electronic device comprises an on-chip memory and a memory according to the present disclosure. In certain embodiments, the memory is a DRAM. The on-chip memory includes a cache or a buffer.

According to an on-chip memory, an electronic device and a method of operating the on-chip memory of the present disclosure, in an AP-CP one chip structure, memory latency is secured with respect to a code required to process a real time of a CP, and thus stable communication is secured. In addition, memory latency is reduced in the CP, and amounts of data that are processed during the same time are increased, and thus a communication bandwidth is improved. With respect to an AP, although a screen size of an electronic device becomes large, a display without disconnection is supported. In addition, through a DRAM latency monitoring, a QoS is supported dynamically according to each IP, and an on-chip memory is utilized with respect to several real time IPs, and thus a latency condition required in an operation is satisfied.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

## BRIEF DESCRIPTION OF THE DRAWINGS

For a more complete understanding of the present disclosure and its advantages, reference is now made to the following description taken in conjunction with the accompanying drawings, in which like reference numerals represent like parts:

FIG. 1 illustrates various embodiments of the existing AP-CP connection structure according to the present disclosure;
FIG. 2 illustrates another embodiment of the existing AP-CP connection structure according to the present disclosure;
FIG. 3 illustrates a configuration of various embodiments of an electronic device according to the present disclosure;
FIG. 4 illustrates a configuration of various embodiments of the electronic device according to the present disclosure;
FIG. 5 illustrates a configuration of various embodiments of a memory module according to the present disclosure;
FIG. 6 illustrates various embodiments of an allocation table according to the present disclosure;
FIG. 7 illustrates various embodiments of the allocation table according to the present disclosure;
FIG. 8A illustrates various embodiments of a usage of a memory for a dedicated area;
FIG. 8B illustrates various embodiments of a usage of a memory for a normal area;
FIG. 9 illustrates various embodiments of an operation table according to the present disclosure;
FIG. 10 illustrates various embodiments of a usage of the operation table;
FIG. 11 illustrates another example of the usage of the operation table;
FIG. 12 illustrates a preload;
FIG. 13 illustrates various embodiments of a division of data on which the preload is performed;
FIG. 14 illustrates a performance process of various embodiments of a method of operating a memory according to the present disclosure;
FIG. 15 illustrates a role of a memory module for a display IP;
FIG. 16 illustrates a tag memory according to the present disclosure;
FIG. 17 illustrates a performance process of various embodiments of a method of operating a memory according to the present disclosure;
FIG. 18 illustrates a performance process of another embodiment of a method of operating a memory according to the present disclosure;
FIG. 19 illustrates a real time condition of a display according to a resolution change; and

FIG. 20 illustrates a download time and image quality of an image according to a communication bandwidth.

**DETAILED DESCRIPTION**

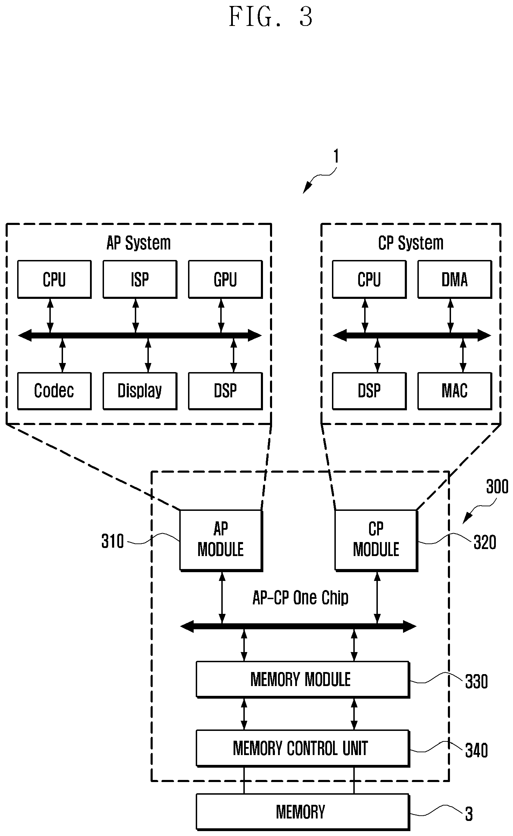

FIGURES 3 through 20, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged wireless communication device. Hereinafter, embodiments of the present disclosure will be described in detail with reference to the accompanying drawings. It is noted that, where possible, the same reference numerals are designated to the same components in the accompanying drawings. Further, a detailed description of a known function and configuration which may make the subject matter of the present disclosure unclear will be omitted.

FIG. 3 is a block diagram illustrating a configuration of various embodiments of an electronic device according to the present disclosure.

Referring to FIG. 3, the electronic device 1 according to the present disclosure includes a memory system 300 and a memory 3. The electronic device 1 includes a mobile station, a fixed or mobile subscriber station, a pager, a cellular telephone, a personal portable terminal (e.g., a PDA), a smartphone, a laptop, a netbook, a personal computer, a wireless sensor, and the like. The memory system 300 is manufactured as one chip. That is, the memory system 300 is manufactured as a System on Chip (SoC). The memory 3 includes a DRAM memory.

The memory system 300 includes an Application Processor (AP) module 310, a Communication Processor (CP) module 320, a memory module 330 and a memory control unit 340.

The AP module 310 includes a Central Processing Unit (CPU), an Image Signal Processor (ISP), a Graphic Processing Unit (GPU), a H/W codec Intellectual Property (IP), a display IP and a Digital Signal Processing (DSP).

The CP module 320 includes a CPU, a DSP, a Direct Memory Access (DMA), a MAC IP and the like.

The AP module 310 and the CP module 320 are connected to the memory module 330 through a main bus.

The memory module 330 is implemented as a buffer type or a cache type, and is connected to the main bus. The IPs in the AP module 310 and the CP module 320 use the memory module 330 through the main bus. The memory module 330 is an on-chip memory.

The memory control unit 340 is connected to the memory module 330, and is connected to the memory 3 through an interface. The memory control unit 340 accesses the memory 3 to read data from the memory 3 or to store data in the memory 3. The memory control unit 340 transfers the data read from the memory 3 to at least one among the AP module 310, the CP module 320 and the memory module 330, and stores data received from the AP module 310, the CP module 320 and the memory module 330 in the memory 3.

The memory control unit 340 receives a request for a memory from at least one of the AP module 310, the CP module 320 and the memory module 330, and transfers the received request to the memory 3. In certain embodiments, the request is a request of data stored in the memory and is a request of a storage of data in the memory. In certain embodiments, the request for the memory is referred to as a memory request.

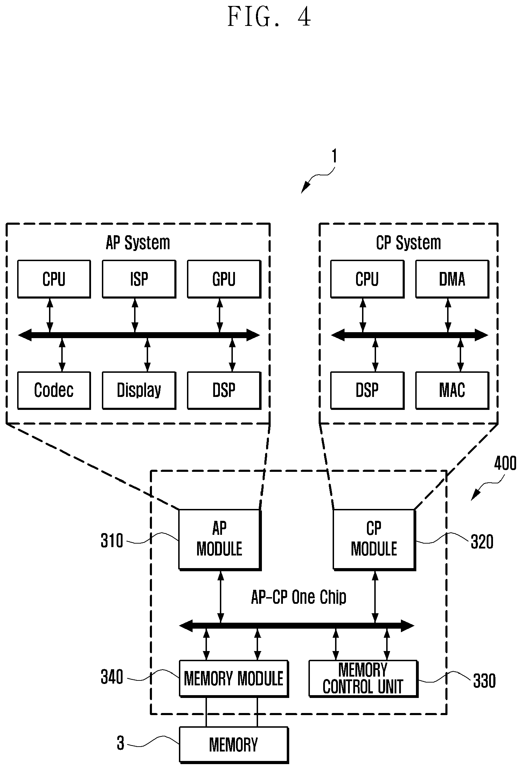

FIG. 4 is a block diagram illustrating a configuration of another embodiment of an electronic device according to the present disclosure.

Referring to FIG. 4, as various embodiments, the electronic device 1 includes a memory system 400 instead of the memory system 300. A memory control unit 340 of the memory system 400 is connected to a main bus. That is, the memory module 330 and the memory control unit 340 are independently connected to the main bus. In certain embodiments, other configuration elements of the memory system 400 correspond to the configuration elements of the memory system 300, respectively, and thus detailed descriptions will be omitted.

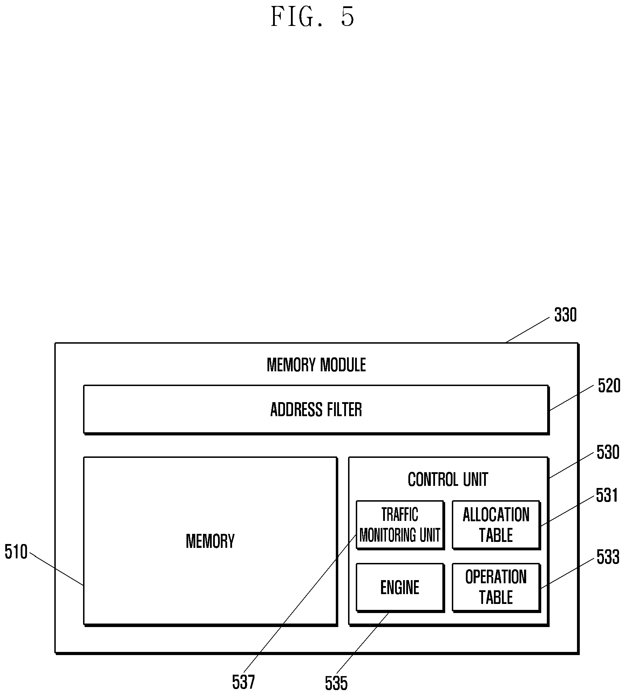

FIG. 5 is a block diagram illustrating a configuration of various embodiments of the memory module according to the present disclosure.

Referring to FIG. 5, the memory module 330 includes a memory 510, an address filter 520 and a control unit 530.

The memory 510 stores data and is implemented as a buffer type or a cache type.

The address filter 520 configures an address section where the memory 510 is used, and filters a memory request received from the AP module 310 or the CP module 320 according to information on the configured address section.

The address filter 520 defines a start address and an offset of the address section in advance and filters the memory request received from the AP module 310 or the CP module 320 using the start address and the offset. The address filter 520 changes the start address and the offset during a run time. That is, the run time change of the start address and the offset is possible.

According to various embodiments, an end address of the address section is configured instead of the offset.

The start address and the end address of the address section corresponds to a start address and an end address of a section where the data is stored in the memory 3, which is stored in the address section.

The control unit 530 includes an allocation table 531, an operation table 533, an engine and traffic monitoring unit 537.

The control unit 530 controls the memory based on predetermined information. In certain embodiments, the predetermined information includes information on at least one of a preload area of a real time IP, a latency threshold, and a usage of the memory 510 in a threshold situation. The predetermined information is defined at a design time of the memory systems 300 and 400.

The control unit 530 sets the operation table 533 based on the predetermined information. The control unit 530 monitors traffic of the memory 3 during the run time to detect a usage situation of the memory 3, and controls an allocation of an area and a prefetch of the memory 510 for the IP based on information stored in the operation table 533.

The allocation table 531 stores at least one piece of information on an on-chip memory allocation size according to each group of master IPs and information on a usage status. In certain embodiments, the master IP is a real time IP.

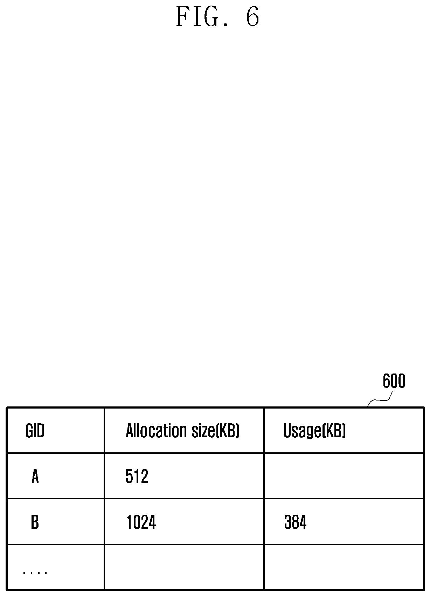

FIG. 6 is a view illustrating various embodiments of the allocation table according to the present disclosure. FIG. 6 illustrates a configuration of the allocation table when the memory 510 is implemented as the buffer.

Referring to FIG. 6, each row of the allocation table 600 include at least one of a Group ID (GID) field, an allocation size field and a usage field. Information defining an on-chip memory size to be used according to each IP group is stored each row of the allocation table 600. In each row of the allocation table 600, information on an allocation of an area of the memory 510 of which the size is suitable for a corresponding IP is stored. In certain embodiments, the field is referred to as an element, a row and the like.

The GID field stores information for identifying a corresponding group.

The allocation size field stores information on a memory area to be allocated to a corresponding group. The information indicates an allocation size to be allocated to the buffer.

The usage field includes information on the usage status of the allocated memory area. The information indicates a real usage size.

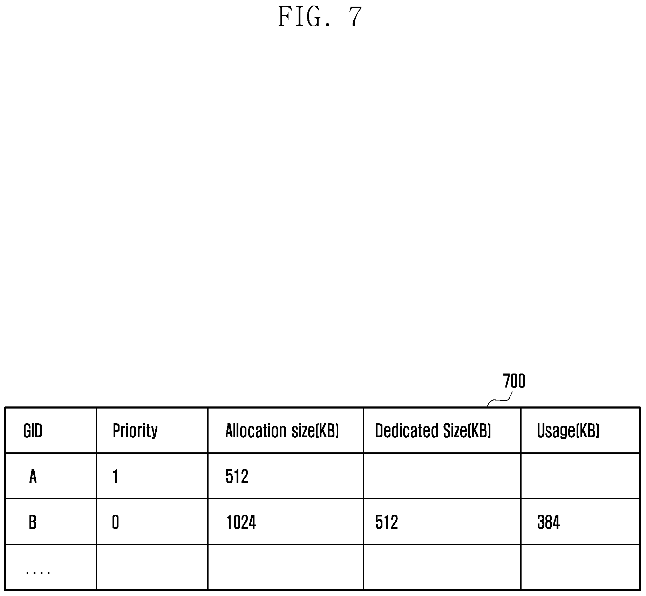

FIG. 7 is a view illustrating another embodiment of the allocation table according to the present disclosure. FIG. 7 illustrates a configuration of the allocation table when the memory 510 is implemented as the cache.

Referring to FIG. 7, each row of the allocation table 700 includes at least one of a Group ID (GID) field, a priority field, an allocation size field, a dedicated field and a usage field. Information defining an on-chip memory size to be used according to each IP group is stored in each row of the allocation table 700. In each row of the allocation table 700, information on an allocation of an area of the memory 510 of which the size is suitable for a corresponding IP is stored. In certain embodiments, the field is referred to as an element, a row and the like.

When the memory 510 is implemented as the cache, another IP uses an excessive amount of the memory 510, and thus a predetermined space may not be secured in the real time IP. In order to prevent this, a dedicated area is configured. In order to utilize a priority in a cache replacement, the priority is configured and used to increase a rank of a real time IP requiring a prior security. The allocation table 700 is used to record such information.

The GID field stores information for identifying a corresponding group.

The priority field stores information on a priority of a corresponding group.

The allocation size field stores information on a memory area to be allocated to a corresponding group. The information indicates an allocation size to be allocated to the buffer.

The dedicated field stores information on a dedicated area of a corresponding group. As described above, the dedicated area is utilized as a dedicated space which is to be maintained at the lowest estimate. Data preloaded and used by the engine 535 is also allocated to the dedicated area. A normal area except for the dedicated area is a common use space used by several IPs.

The usage field includes information on the usage status of the allocated memory area. The information indicates a real usage size.

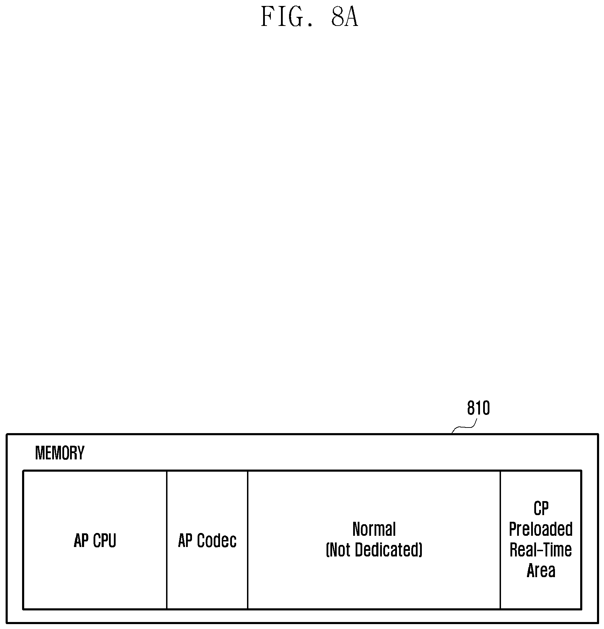

FIG. 8A is a view illustrating various embodiments of the usage of the memory for the dedicated area.

Referring to FIG. 8A, a memory 810 shows a case in which a memory 510 is dedicated and allocated to a CPU of the AP module 310, a codec and a preload area of the CP. When the memory 510 is implemented as a cache type, a normal area -allocated to and used dynamically for an IP of which the number of accesses to the memory 3 is large.

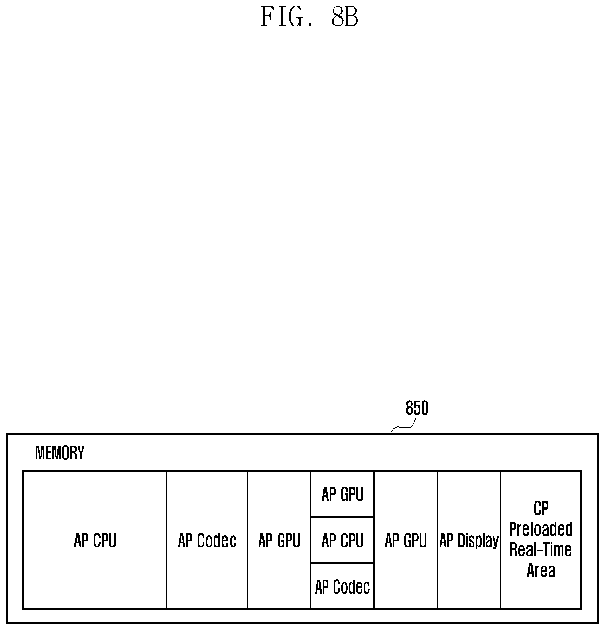

FIG. 8B is a view illustrating various embodiments of the usage of the memory for the normal area.

Referring to FIG. 8B, the memory 850 shows various embodiments of the memory 510 for the normal area that is generated due to a usage of the GPU during the run time. The control unit 530 continuously updates the usage field of the allocation table 700 during the run time and changes the allocation size according to a scenario.

The operation table 533 stores information on the usage of the memory 510 according to the scenario and a definition related to a prefetch usage.

A method of using the memory 510 and the prefetch for each event situation is defined in advance, and information on the definition is stored in the operation table 510. A usage scenario means a definition of the method of using the memory 510 and the prefetch for each event situation in advance.

In addition, the usage of the memory 510 of other IPs is defined in advance, and information on the definition is stored in the operation table 533. The information is used in a case in which a prior process for securing latency with respect to any IP is required.

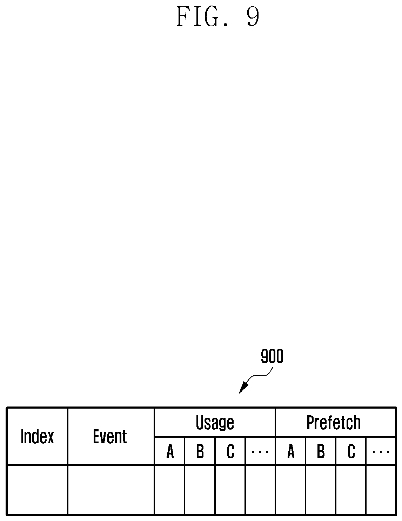

FIG. 9 is a view illustrating various embodiments of the operation table according to the present disclosure.

Referring to FIG. 9, the operation table 900 includes at least one of an index field, an event field, a usage field and a prefetch field. In certain embodiments, the field is referred to as an element, a row and the like.

The index field stores an index related to a corresponding column of the operation table 900.

The event field stores information on an event. For example, the event is a booting, and is a case in which it gets to a latency threshold 'x' with respect to 'A' IP.

The usage field stores information on a use or a nonuse of the memory 510 for the event indicated by the information stored in a corresponding event field. A memory use of a case in which it gets to the latency threshold with respect to the real time IP of the AP module 310 is defined, and the information includes information on the definition. In certain embodiments, 'On' indicates the use of the memory 510, and 'Off indicates the nonuse of the memory 510.

The prefetch field includes at least one of information on whether a prefetch or a preload for the event indicated by the information stored in the corresponding event field is to be performed or not, and information on an area where a preload is performed. It is determined that the prefetch or the preload is to be performed or not based on the information on whether the prefetch or the preload is to be performed or not. In certain embodiments, 'On' indicates a performance of the prefetch, and 'Off indicates a non-performance of the prefetch.

An address indicating the area where the preload is performed includes at least one of a start address, an offset and an end address.

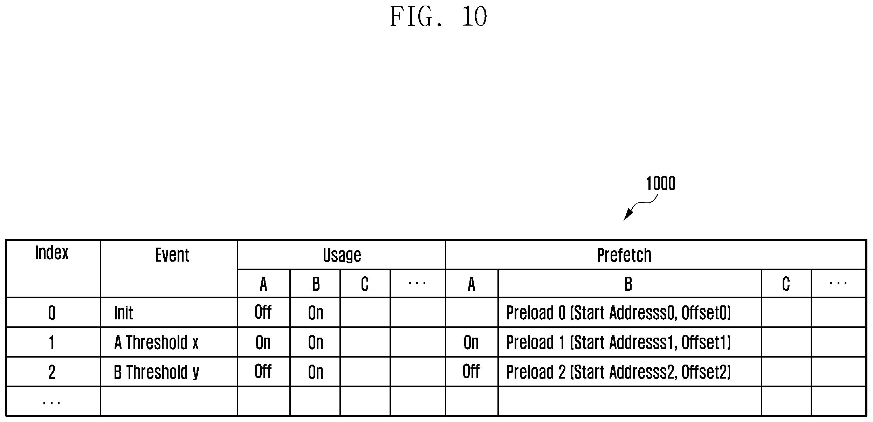

FIG. 10 is a view illustrating various embodiments of a usage of the operation table.

Referring to FIG. 10, the operation table 1000 is an example of an operation table of a case in which the memory 510 is implemented as a buffer structure.

'Init' stored in an event field of a row of an index 'O'indicates a booting.

'A Threshold x' stored in an event field of an index '1' indicates a time when it gets to a latency threshold 'x' with respect to 'A' IP.

'On' stored in 'A' field among usage fields of a row of an index '1' indicates that 'A' IP uses the memory 510 when it gets to the latency threshold x with respect to 'A' IP during the run time.

'Preload 0 (Start Address, Offset 0)' stored in 'B' field among prefetch fields of the row of index '0' indicates an area where a preload is performed is preload '0'.

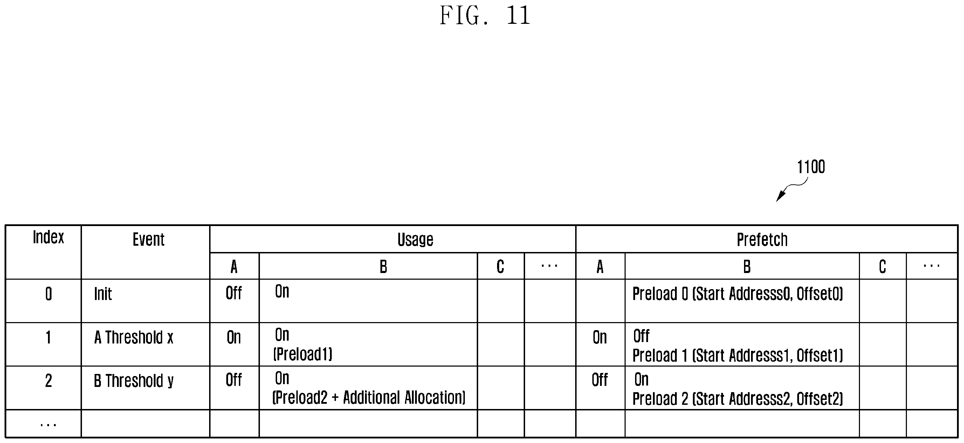

FIG. 11 is a view illustrating another example of the usage of the operation table.

Referring to FIG. 11, the operation table 1100 is an example of the usage of the operation table of a case in which the memory 510 is implemented as a cache structure. When the memory 510 is implemented as the cache, since the memory 510 is operated by dividing the memory 510 into a dedicated area and the normal area, an additional allocation and prefetch on and off is defined in the normal area to use the additional allocation and prefetch on and off.

'On (Preload 2 + Additional Allocation' stored in 'B' field of a usage field of a row of index '2' indicates that 'B' IP uploads a preload section indicating 'Preload 2' in the dedicated area, additionally allocates a memory area of a size indicated by 'Additional allocation', and performs a prefetch, when it gets to latency threshold Y with respect to 'B' IP during the run time.

The engine 535 performs the preload and the prefetch for the memory 510. The engine 535 performs the preload based on at least one piece of information stored in the allocation table 530 and information stored in the operation table 533. In addition, the engine 535 performs the prefetch for the memory 510 based on the memory request of the AP module 310 or the CP module 320, and a normal prefetch algorithm such as a sequential prefetch, a stride prefetch, and a global history buffer is applied to the prefetch. In addition, the engine 535 determines a time when the preload or the prefetch should be performed based on the information stored in the event field of the operation table 533 and information identified through the traffic monitoring unit 537, and changes an operation of the engine 535 according to a scenario based on the information stored in the operation table 533.

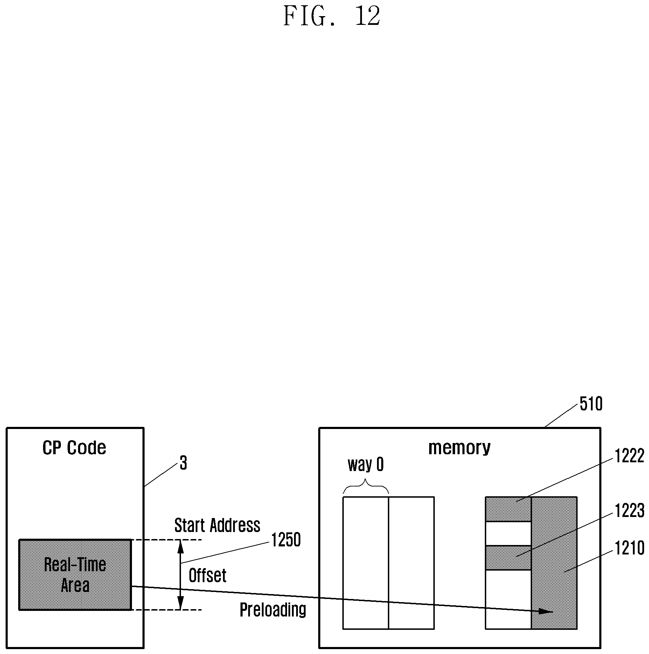

FIG. 12 is a view for describing the preload.

Referring to FIG. 12, when a booting of the electronic device 1 is finished, the control unit 530 loads a predetermined preload area in the operation table 533 to the memory 510. A CP code is loaded in the memory 510 according to a usage scenario. When the preload is finished, the control unit 530 updates the usage field of the allocation table 531.

When the memory 510 is implemented as the cache, if an allocated and used size 1250 is close to a way size, one way 1210 is allocated and insufficient portions are allocated to another way in line units 1222 and 1223. When the preload area is loaded on the cache, dedicated and lock states are configured to a tag memory of a corresponding cache line to enable the preload area stays the cache.

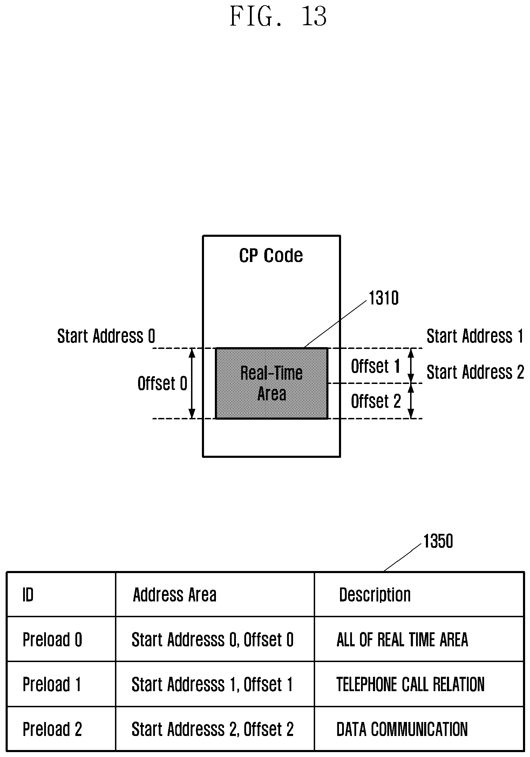

The preload area is changed according to the usage scenario of the CP module 320. Since the AP module 310 knows information on the usage of the CP module 320, such as an airplane mode, a use of WiFi and the like of the electronic device 1, the AP module 310 fluidly uses the preload area in relation to the information. When the CP module 320 is not used in the airplane mode, an area of the memory 510, which was allocated to the CP module 320 is used for another purpose by including the preload. When the electronic device 1 uses WiFi, a preload 0 shown in FIG. 13 is changed to preload 1, and an area which was allocated to the CP module 320 is used by another IP.

The traffic monitoring unit 537 monitors a memory latency change of a real time IP of the AP module 310 and the CP module 320 in a regular period, and calculates the memory latency using a request response cycle difference and an operation frequency. In certain embodiments, when the memory 3 is a DRAM, the memory latency is a DRAM latency.

FIG. 13 is a view illustrating various embodiments in which data is divided according to a scenario.

Referring to FIG. 13, in the CP module 320, an area where a preload is performed is applied differently according to an importance and a scenario. A section where a real time process is required is identified at a design time, and is divided into several types according to the importance and a usage scenario. A method of dividing the real time area according to the scenario is identified in a table 1350. The preload area is differently utilized in consideration of an operation situation of the AP module 310 and a DRAM usage situation, during the run time. When there is a large margin in the memory 510 and a DRAM access is low, preload 0 is allocated to the memory 510 to be used. If WiFi of the electronic device 1 is operated, only preload 1 related to a telephone call protocol is allocated to the memory 510 to be used. When traffic of the CP module 320 becomes large, preload 2 is additionally allocated to the memory 510 to be used. A method of uploading a corresponding area includes a method of performing the preload according to traffic condition by the engine 535 or a method of instructing a performance of the preload by the CP module 320 or the AP module 310.

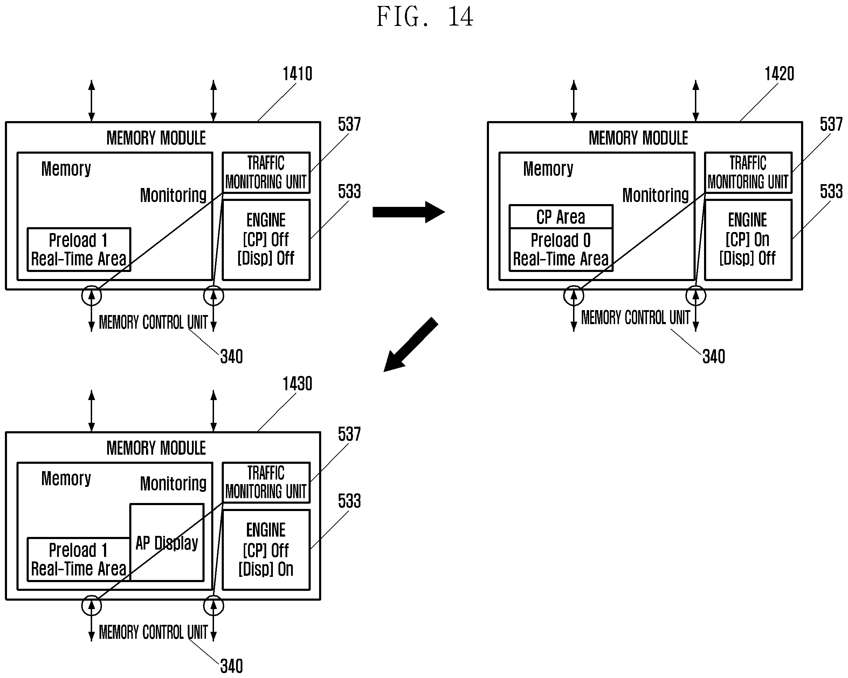

FIG. 14 is a view for describing a performance process of various embodiments of a method of operating a memory according to the present disclosure. FIG. 14 illustrates a process of operating the memory 510 based on DRAM latency with respect to the CP and the AP display.

Referring to FIG. 14, the latency is displayed as a sum of bus latency and latency of the memory 3. In certain embodiments, the bus latency is determined at the design time, and does not largely change during the run time in consideration of a predetermined margin. However, since the latency of the memory 3 is changed according to an access pattern and traffic amount, the memory module 330 according to the present disclosure monitors the latency of the memory 3 and utilizes a value obtained by the monitoring in an operation of the memory 510. In certain embodiments, the latency of the memory 3 is defined as a time difference between a time when the memory request is transferred from the memory module 330 to the memory 3 to a time when data related to the memory request arrives at the memory module 330.

With respect to a random real time IP, delta is defined by the following equation 1.

$$\text{Equation 1}$$

$$\text{Delta} = \text{Threshold} - \text{Monitored DRAM Latency}$$

In a case of Delta ≤ Margin, the memory allocation and the prefetch operation defined in the operation table 533 are performed. Since most real time IPs have a limit condition with respect to the latency and calculate the bus latency at the design time, a threshold also is defined at the design time. The margin is determined according to the limit condition of the real time IP.

The control unit 530 controls the operation of the memory 510 by performing state 1410, step 1420 and step 1430.

In a case of "CP Threshold y - Monitored Latency > MarginCP," the control unit 530 controls such that the state of the memory 510 becomes the state 1410. In the state 1410, the memory 510 stores preload 1 area of the CP module 320.

In a case of "CP Threshold y - Monitored Latency ≤ MarginCP," the control unit 530 changes the state of the memory 510 from the state 1410 to a state 1420. In the state 1420, the memory 510 stores preload 0 area of the CP module 320. When the memory 510 is implemented as the cache, the control unit 530 allows a cache allocation for a CP normal access and performs the prefetch in the state 1420.

In a case of "Display Threshold x - Monitored Latency ≤ MarginDisp," the control unit 530 changes the state of the memory 510 from the state 1420 to the state 1430. In the state 1430, the memory 510 stores the preload 1 area of the CP module 320 and a display area of the AP module 310, and the control module 530 performs a prefetch for the display area. When the memory 510 is implemented as the cache, the control module 530 releases a lock of preload 2 of the CP module 320 to configure preload 2 as a replacement object, allows a cache allocation for the display IP, and performs a prefetch for a display IP, and thus reduces latency of the display IP.

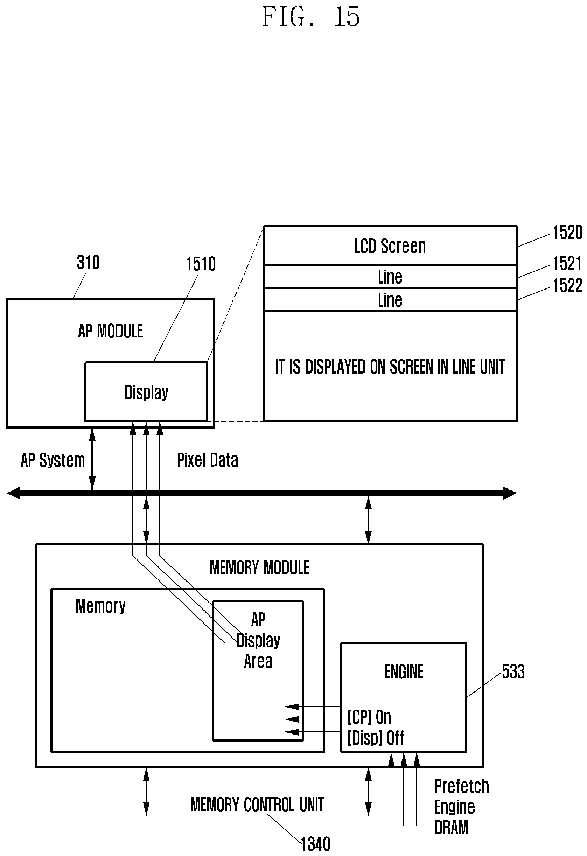

FIG. 15 is a view for describing a role of the memory module 330 for the display IP. FIG. 15 illustrates a cache usage for the display IP.

Referring to FIG. 15, a display IP 1510 is a real time IP, and when one screen is configured, several pages of images are combined and output on a screen 1520. If one page of a full HD frame corresponds to about 7.9 MB and the display IP 1510 combines three images and outputs the images on the screen, an image size of about 23 MB is necessary in a worst case. However, since this is not a size that can be handled by the memory 510, not all images can be allocated to the memory 510.

However, when the display IP outputs the images in one line unit 1521 and 1522, a cache size which is really necessary is reduced and an access of the memory 3 is hidden. In a full HD standard, when one line corresponds to 1920 pixels in a screen of which a resolution is 1920 * 1080 and the number of bytes per pixel corresponds to 4 Bytes/pixel, data size for one line is calculated by the following equation 2.

$$\text{Equation 2}$$

$$1 \text{ Line} = 1920 * 4 \text{ Bytes/Pixel} = 7.5\text{KB}$$

$$\text{Equation 3}$$

$$60\text{FPS} = 1 / 60 \text{ s} = 1 / 60 / 1080 \text{ s} = 15.4\text{us}$$

According to equation 3, the display IP should output 7.5 KB per 15.4 us at the lowest estimate to display the image on the screen normally. Although the three images are used and a margin is considered, when only about 128 KB is allocated to the memory 510 each 5 lines is maintained in the cache. In certain embodiments, when the engine 535 fulfills data of a line of a frame, which is consistently output, in advance, the DRAM access of the display IP is hidden to a low space of the memory 510. Through this, when a high resolution camcoding or a downloading of the electronic device 1 is progressed, a stability of a display is secured and a stop time is reduced.

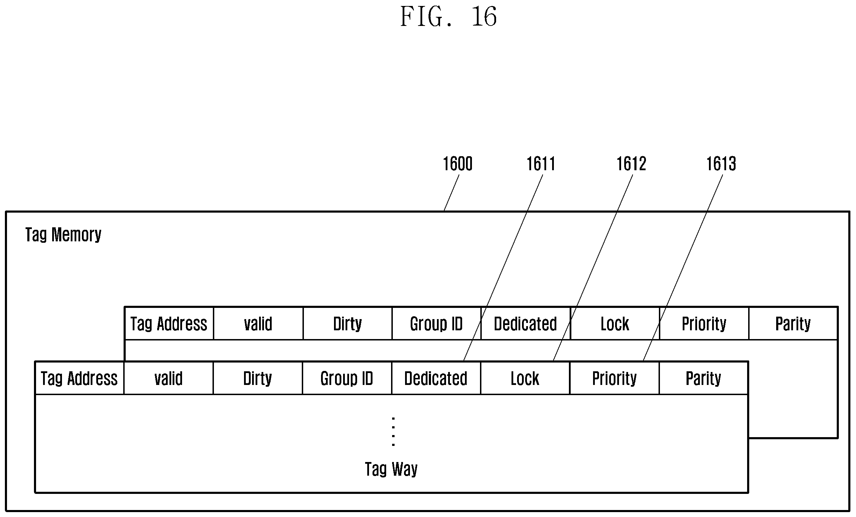

FIG. 16 is a view illustrating the tag memory according to the present disclosure.

Referring to FIG. 16, several IPs use the memory 510. When the memory 510 is implemented as the cache, an allocation management is necessary such that each IP uses an area of a designated size and preloaded data stays in the memory 510.

When the memory 510 is implemented as the cache, the memory 510 includes a tag memory 1600 and a data memory. State information on a state which displays a state of cache data is stored in the tag memory 1600, and the engine 535 performs the allocation management using the state information. The state includes 'dedicated', 'priority' and 'lock state'. The dedicated 1611 indicates a dedication of the IP or the IP group, and the lock state 1612 indicates an object which is not replaced. The priority 1613 is used to identify a sequence which is considered in a case of a replacement object.

When any IP accesses the memory 510 implemented as the cache, if a cache miss is generated, a new cache line should be allocated. If there is not an empty space, the new cache line should be allocated to a cache line which was being used. That is, a replacement should be performed, and the engine 535 determines a replacement object (i.e., victim) according to the following priority.

① Empty space of a dedicated area
② Empty space of a normal area
③ Cache line of a group of which priority is low of the normal area
④ Cache line of a group of which priority is the same of the normal area
⑤ Cache line of the same group of the normal area
⑥ Cache line which is unlocked and used in the dedicated area

The preload area is excluded from the replacement object by performing dedicated and lock processes. If a cache line satisfying the condition is not searched, the cache allocation is not performed. Contents proposed in the present disclosure are a method of previously selecting a candidate of the replacement object before performing the replacement for allocating the new cache line, and is used together with a replacement policy such as the existing 'Random', 'Round-Robin' and 'LRU'. In addition, when the number of the IPs using the memory 510 is small and thus it is not necessary to consider the priority, ③ and ④ in the above is excluded and thus the priority is simple.

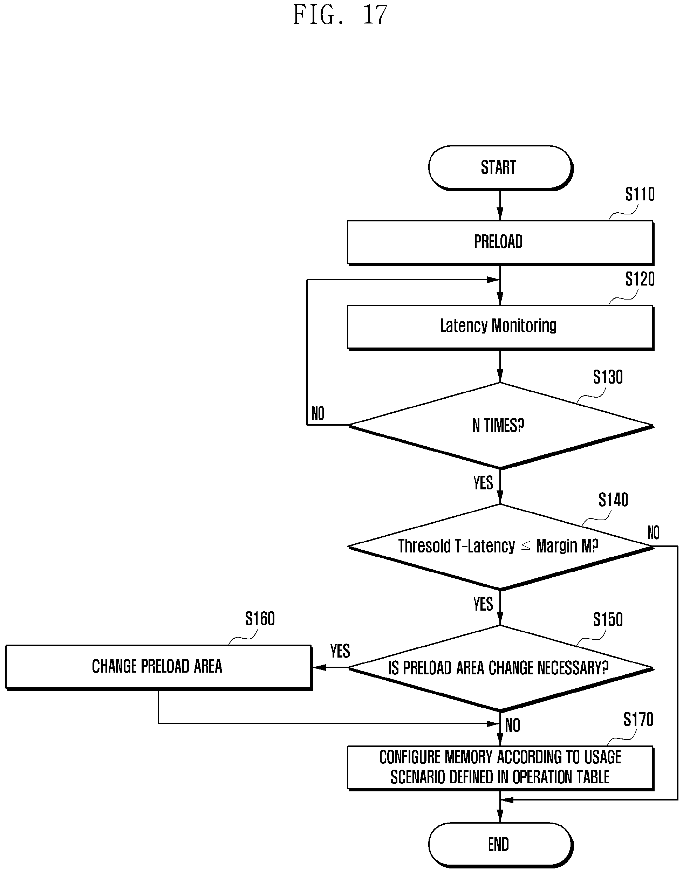

FIG. 17 is a flowchart illustrating a performance process of various embodiments of a method of operating the memory according to the present disclosure.

Referring to FIG. 17, in operation S110, the engine 530 preloads data in the memory 510. The data is data stored in a predetermined preload area in the operation table 533. The engine 530 allocates an area of the memory 510 according to each IP based on information stored in the allocation table 513, and load the data stored in the preload area of each IP in a corresponding memory area allocated to each IP. After the preload is finished, the engine 530 updates the usage field of the allocation table 531. Operation S110 may be executed after the booting of the electronic device 1 is finished.

In operation S120, the traffic monitoring unit 537 monitors the latency of the memory 3. The traffic monitoring unit 537 monitors a memory latency change of a real time IP of the AP module 310 and the CP module 320 in a regular period and calculates the memory latency using a request response cycle difference and an operation frequency. In certain embodiments, the memory latency includes at least one of bus latency and the latency of the memory 3.

In operation S130, the engine 535 identifies that the memory latency is monitored by a predetermined repetition number 'N').

In operation S140, when the memory latency is monitored N times, the engine 535 identifies whether "Delta ≤ Margin" is satisfied.

In operation S150, when "Delta ≤ Margin" is satisfied, the engine 535 identifies whether a change of the preload area loaded in the memory 510 based on the information in the operation table 535 is necessary.

In operation S160, when the change of the preload area is necessary, the engine 535 changes the preload area loaded in the memory 510 based on the information in the operation table. In certain embodiments, after the engine 535 changes the preload area, the engine 535 update the allocation table 531 according to changed contents.

In operation S170, when the change of the preload area is not necessary or the preload area is changed, the engine 535 configures the memory 510 according to the usage scenario defined in the operation table 533. This process is consistently generated after the electronic device 1 is booted.

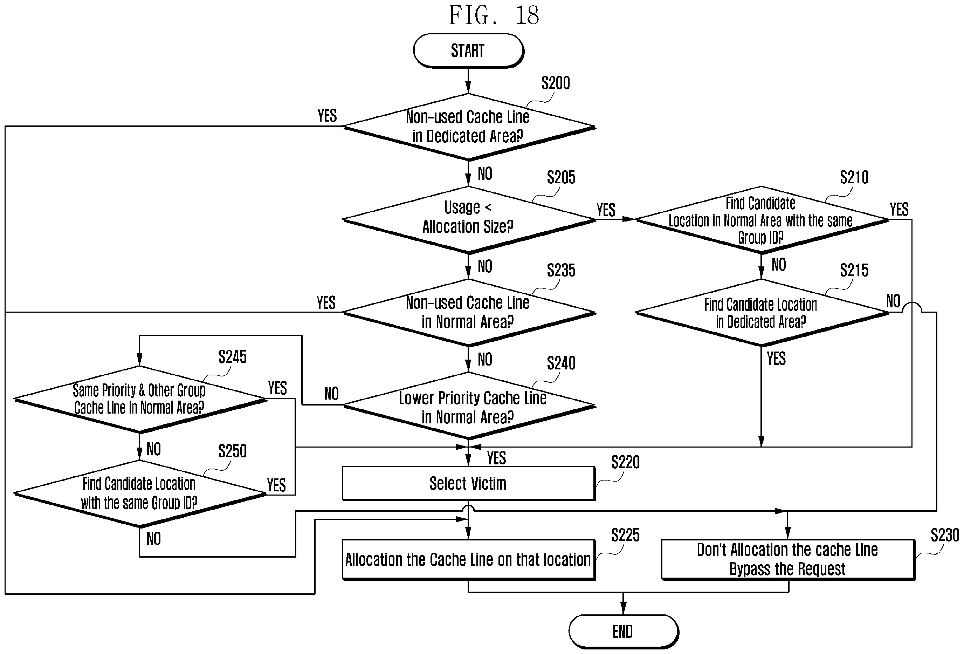

FIG. 18 is a flowchart illustrating a performance process of another embodiment of a method of operating the memory according to the present disclosure.

Referring to FIG. 18, in operation S200, when the memory request is received from a specific IP, the engine 535 identifies whether an unused cache line is included in the dedicated area.

In operation S205, when there is not an unused cache line, the engine 535 identifies whether a memory usage capacity requested by the memory request is smaller than that of the cache line.

In operation S210, when the usage capacity is smaller than that of the cache line which is allocated to a corresponding IP, the engine 535 searches for a candidate location in a normal area of an IP having a GID the same as that of the IP requesting the memory request.

In operation S215, when the candidate location is not discovered in the normal area, the engine 535 searches for the candidate location in the dedicated area.

In operation S220, when the candidate location is discovered in the dedicated area, the engine 535 selects the replacement object. In certain embodiments, the engine 535 selects an unlocked cache line as the replacement object.

In operation S225, the engine 535 stores data, which is requested by the memory request received in step S200, in an area where the replacement object is stored.

In operation S230, when the candidate location is not discovered in the dedicated area, the engine 535 does not allocate the cache line and transfers the memory request received in step S200 to the memory 3.

When the candidate location is discovered in the normal area, the engine 535 performs step S220. In certain embodiments, the engine 535 selects a cache line of the same group of the normal area as the replacement object.

In operation S235, when the usage capacity is not smaller than that of the cache allocated to a corresponding IP, the engine 535 identifies whether the unused cache line is in the normal area.

In operation S240, when the unused cache line is not in the normal area, the engine 535 identifies whether a cache line for an IP having a low priority is in the normal area.

When the cache line for the IP having the low priority is in the normal area, the engine 535 performs operation S220. In certain embodiments, the engine 535 selects the cache line as the replacement object.

In operation S245, when the cache line for the IP having the low priority is not in the normal area, the engine 535 identifies whether a cache line of a different group, of which a priority is the same, is in the normal area.

When the cache line of the different group, of which the priority is the same, is in the normal area, the engine 535 performs operation S220. In certain embodiments, the engine 535 select the cache line as the replacement object.

In operation S250, when the cache line of the different group, of which the priority is the same, is not in the normal area, the engine 535 searches for the candidate location in an area allocated for the IP having the GID the same as that of the IP requesting the memory request.

When the candidate location is discovered in the area allocated for the IP having the GID the same as that of the IP requesting the memory request, the engine 535 performs operation S220. In certain embodiments, the engine 535 selects the candidate location as the replacement object.

When the candidate location is not discovered in the area allocated for the IP having the GID the same as that of the IP requesting the memory request, the engine 535 performs operation S230.

When the unused cache line is in the normal area, the engine 535 performs operation S225. In certain embodiments, the engine 535 stores the data requested by the memory request, which is received in operation S200, in an area where the cache line is stored.

When the unused cache line is in the dedicated area, the engine 535 performs operation S225. In certain embodiments, the engine 535 stores the data requested by the memory request, which is received in operation S200, in the area where the cache line is stored.

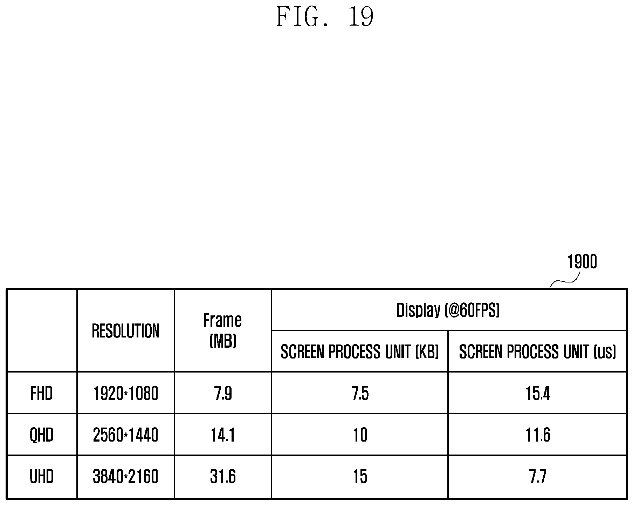

FIG. 19 is a view of a table illustrating a real time condition of a display according to a resolution change.

Referring to FIG. 19, when a resolution of a screen becomes large, since an AP traffic is increased by two to four times or more, a real time request of an AP display IP as well as a memory latency limit of the CP becomes larger. This is identified in the table 1900.

In the AP-CP one chip, when real time conditions are not satisfied, a user experience quality degradation of a communication and a display. The user experiences a phenomenon in which contents are damaged during downloading and an image or a voice is disconnected during a video call. Also, a frequency of experiences, in which an image is disconnected when an application update is performed while a high resolution of image is photographed, or an image is disconnected when a high resolution image is reproduced during downloading, is increased. Of course, in order to prevent such situations, sufficient verifications should be performed in a development step, but when a condition cannot be satisfied, products having a required performance may not be released.

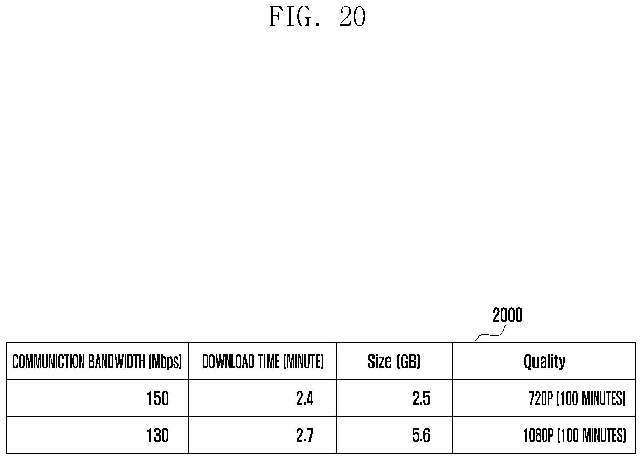

FIG. 20 is a view of a table illustrating a download time and image quality of an image according to a communication bandwidth.

Referring to FIG. 20, requests for a communication performance at an increased resolution have been continuously increased. Specially, response speed improvement requests of a terminal have been increased, due to an image quality of a video call, an on-line game, Internet browsing, a streaming service, and the like. Usage of large capacity contents in a terminal has been expanded. It is identified that image quality of an image received during a similar time is different according to a change of a communication bandwidth. Since a request for a high resolution is persistent even in the future, a generation possibility of a real time security problem of a communication function, a display function and the like in the AP-CP one chip 200 is increased. To this end, the present disclosure provides the memory module 330, an electronic device including the same and a method of operating the same, to reduce the memory latency in the AP-CP one chip structure.

Since sizes of the previously used TCM and cache are limited, there is a limit in reducing latency. This is because it is difficult to load all codes on an on-chip since a protocol code size of a communication performed by the CP is too large. Specially, a code used in controlling a DSP needs a real time process. When a cache miss is generated while such a code is performed, a DRAM access should be performed. If DRAM latency becomes long, a communication cannot be properly performed. In addition, while the DRAM is used together with the AP, since DRAM latency becomes long compared to a case in which a CP dedicated DRAM is used, a real time process cannot be secured only using the TCM and an internal cache.

Generally, a cache cannot secure 100 % of real time process. This is because a completion of an operation in a specific time should be secured for the real time process, but in the case of the cache, when the cache miss is generated, the latency is increased, and it is difficult to expect such a case.

A priority based QoS used in a bus and a DRAM control unit facilitates a prior process for a specific transaction. However, the QoS is used, a fundamental DRAM latency is not reduced, and since a process of a transaction of another IP cannot be continuously delayed, it is difficult to secure a real time. In addition, when important real time transactions, such as a CPU code of the CPU and a display of the AP are entered into a DRAM simultaneously, since one makes a loss according to a priority, the real time security becomes more difficult. To this end, the present disclosure provides the memory module 330, an electronic device including the same and a method of operating the same to reduce the memory latency in the AP-CP one chip structure.

Although the present disclosure has been described with an exemplary embodiment, various changes and modifications may be suggested to one skilled in the art. It is intended that the present disclosure encompass such changes and modifications as fall within the scope of the appended claims.

**Claims**

1. An on-chip memory comprising:

   a plurality of design Intellectual Properties (IPs);
   a memory that includes a storage area; and
   a processor connected to the memory,
   **characterised in that** the processor is configured to:

   monitor latency of a memory traffic for at least one IP among the plurality of IPs, and
   control a usage of a storage area corresponding to the at least one IP, if a difference between a latency threshold value corresponding to the at least one IP and a monitored latency of the at least one IP is smaller than a predetermined value, based on an operation table including information for the at least one IP among the plurality of IPs.

2. The on-chip memory of claim 1, wherein at least one of the following applies :

the processor is further configured to preload some or all of data related to at least one IP among the plurality of design IPs on a preload area configured in the storage area in advance, and
the processor is further configured to perform a prefetch on the storage area based on a memory request used by the at least one IP.

3. The on-chip memory of claim 1, wherein the processor is further configured to:

identify whether a predetermined event is generated, and
perform an action for the on-chip memory related to the generated event,
wherein the action for the on-chip memory includes at least one of a change of a preload of an IP related to the generated event, an allocation of the storage area to the IP, an allocation release of the storage area from the IP, an activation of a prefetch performance for the IP, and a deactivation of the prefetch performance for the IP.

4. The on-chip memory of claim 3, wherein the processor is further configured to identify whether the predetermined event is generated based on the result of the monitoring.

5. The on-chip memory of claim 1, wherein the processor is further configured to allocate the storage area to the at least one IP based on allocation information defined according to each IP in advance,
wherein the allocation information includes at least one of information indicating a priority of an allocation area, information indicating a type of the allocation area and information indicating a size of the allocation area, and
wherein the type of the allocation area includes at least one of a dedicated area and a normal area.

6. A method of operating an on-chip memory including a plurality of design Intellectual Properties (IPs), **characterised in that** the method comprising:

monitoring latency of a memory traffic for at least one IP among the plurality of design IPs; and
controlling a usage of a storage area included in the on-chip memory corresponding to the at least one IP, if a difference between a latency threshold value corresponding to the at least one IP and a monitored latency of the at least one IP is smaller than a predetermined value, based on an operation table including information for the at least one IP among the plurality of IPs.

7. The method of claim 6, wherein at least one of the following applies:

further comprising preloading some or all of data related to at least one IP among the plurality of design IPs on a preload area configured to the storage area in advance; and
further comprising performing a prefetch on the storage area based on a memory request used by the at least one IP.

8. The method of claim 6, further comprising:

identifying whether a predetermined event is generated; and
performing an action for the on-chip memory related to the generated event,
wherein the action for the on-chip memory includes at least one of a change of a preload of an IP related to the generated event, an allocation of the storage area to the IP, an allocation release of the storage area from the IP, an activation of a prefetch performance for the IP, and a deactivation of the prefetch performance for the IP.

9. The method of claim 6, wherein controlling the storage area comprises:

identifying whether the predetermined event is generated based on the result of the monitoring; and
performing an action for the on-chip memory related to the generated event.

10. The method of claim 6, further comprising:

allocating the storage area to the at least one IP based on allocation information defined according to each IP in advance,

wherein the allocation information includes at least one of information indicating a priority of an allocation area, information indicating a type of the allocation area and information indicating a size of the allocation area, and wherein the type of the allocation area includes at least one of a dedicated area and a normal area.

11. An electronic device comprising the on-chip memory wherein the on-chip memory comprises:

a plurality of design Intellectual Properties (IPs);
a memory that includes a storage area; and
a processor connected to the memory,
**characterised in that** the processor is configured to:

monitor latency of a memory traffic for at least one IP among the plurality of design IPs and control a usage of a storage area corresponding to the at least one IP, if a difference between a latency threshold value corresponding to the at least one IP and a monitored latency of the at least one IP is smaller than a predetermined value, based on an operation table including information for the at least one IP among the plurality of IPs.

12. The electronic device of claim 11, wherein at least one of the following applies:

the processor is further configured to preload some or all of data related to at least one IP among the plurality of design IPs on a preload area configured in the storage area in advance; and
the processor is further configured to perform a prefetch on the storage area based on a memory request used by the at least one IP.

13. The electronic device of claim 11, wherein the processor is further configured to:

identify whether a predetermined event is generated, and
perform an action for the on-chip memory related to the generated event.

14. The electronic device of claim 13, wherein the action for the on-chip memory includes at least one of a change of a preload of an IP related to the generated event, an allocation of the storage area to the at least one IP, an allocation release of the storage area from the at least one IP, an activation of a prefetch performance for the at least one IP, and a deactivation of the prefetch performance for the at least one IP.

15. The electronic device of claim 13, wherein the processor is further configured to identify whether the generated event is generated based on a result of the monitoring.

**Patentansprüche**

1. On-Chip-Speicher mit:

einer Menge an Intellectual Properties -wiederverwendbare Beschreibungen von Funktionen oder Subsystemen - (IP);
einem Speicher, der eine Speicherfläche umfasst; und
einem Prozessor, der mit dem Speicher verbunden ist,
**dadurch gekennzeichnet, dass** der Prozessor konfiguriert ist, um:

die Latenz eines Speicherverkehrs für mindestens eine IP aus der Vielzahl von IP zu überwachen, und eine Verwendung einer Speicherfläche zu kontrollieren, die der mindestens einen IP entspricht, ob ein Unterschied zwischen einem Latenzschwellenwert, der der mindestens einen IP entspricht, und einer beobachteten Latenz der mindestens einen IP kleiner als ein vorherbestimmter Wert ist, basierend auf einer Operationstabelle mit Informationen für die mindestens eine IP aus der Vielzahl von IP.

2. On-Chip-Speicher nach Anspruch 1, wobei mindestens eines der Folgenden gilt:

der Prozessor ist des Weiteren konfiguriert, um einige oder alle Daten vorzuladen, die auf mindestens eine IP aus der Vielzahl von IP bezogen sind, auf einer Vorladefläche, die in der Speicherfläche im Voraus konfiguriert ist, und

der Prozessor ist des Weiteren konfiguriert, um ein Prefetch auf der Speicherfläche auszuführen, basierend auf einer Speicheranforderung, die von der mindestens einen IP verwendet wird.

3. On-Chip-Speicher nach Anspruch 1, wobei der Prozessor des Weiteren konfiguriert ist, um:

zu identifizieren, ob ein vorherbestimmtes Ereignis erzeugt wird, und
eine Aktion für den On-Chip-Speicher auszuführen, der auf das erzeugte Ereignis bezogen ist,
wobei die Aktion für den On-Chip-Speicher mindestens eine der Folgenden umfasst: eine Veränderung einer Vorladung einer IP, bezogen auf das erzeugte Ereignis, eine Zuweisung der Speicherfläche zu der IP, eine Zuweisungsfreigabe der Speicherfläche von der IP, eine Aktivierung einer Prefetchleistung für die IP und eine Deaktivierung der Prefetchleistung für die IP.

4. On-Chip-Speicher nach Anspruch 3, wobei der Prozessor des Weiteren konfiguriert ist, um zu identifizieren, ob das vorherbestimmte Ereignis erzeugt wird, basierend auf dem Ergebnis der Überwachung.

5. On-Chip-Speicher nach Anspruch 1, wobei der Prozessor des Weiteren konfiguriert ist, um die Speicherfläche zu der mindestens einen IP zuzuweisen, basierend auf Zuweisungsinformationen, die entsprechend jeder IP im Voraus definiert werden,
wobei die Zuweisungsinformationen mindestens eine der Folgenden umfassen: Informationen, die einen Vorrang einer Zuweisungsfläche anzeigen, Informationen, die einen Typ der Zuweisungsfläche anzeigen, und Informationen, die eine Größe der Zuweisungsfläche anzeigen, und wobei der Typ der Zuweisungsfläche eine gewidmete Fläche und/oder eine normale Fläche umfasst.

6. Verfahren zum Betreiben eines On-Chip-Speichers einschließlich einer Menge von Intellectual Properties (IP), **dadurch gekennzeichnet, dass** das Verfahren Folgendes umfasst:

Überwachung der Latenz eines Speicherverkehrs für mindestens eine IP aus der Vielzahl von IP; und
Kontrolle einer Verwendung einer Speicherfläche, die in dem On-Chip-Speicher inbegriffen ist und der mindestens einen IP entspricht, ob ein Unterschied zwischen einem Latenzschwellenwert, der der mindestens einen IP entspricht, und einer beobachteten Latenz der mindestens einen IP kleiner als ein vorherbestimmter Wert ist, basierend auf einer Operationstabelle mit Informationen für die mindestens eine IP aus der Vielzahl von IP.

7. Verfahren nach Anspruch 6, wobei mindestens eines der Folgenden gilt:

das des Weiteren das Vorladen einiger oder aller Daten umfasst, die auf mindestens eine IP aus der Vielzahl von IP bezogen, auf eine Vorladefläche, die zu der Speicherfläche im Voraus konfiguriert ist; und
das des Weiteren die Ausführung eines Prefetchs auf der Speicherfläche umfasst, basierend auf einer Speicheranforderung, die von der mindestens einen IP verwendet wird.

8. Verfahren nach Anspruch 6, das des Weiteren Folgendes umfasst:

Identifizierung, ob ein vorherbestimmtes Ereignis erzeugt wird; und
Ausführung einer Aktion für den On-Chip-Speicher, bezogen auf das erzeugte Ereignis,
wobei die Aktion für den On-Chip-Speicher mindestens eine der folgenden umfasst: eine Veränderung einer Vorladung einer IP, bezogen auf das erzeugte Ereignis, eine Zuweisung der Speicherfläche zu der IP, eine Zuweisungsfreigabe der Speicherfläche von der IP, eine Aktivierung einer Prefetchleistung für die IP und eine Deaktivierung der Prefetchleistung für die IP.

9. Verfahren nach Anspruch 6, wobei die Kontrolle der Speicherfläche Folgendes umfasst:

Identifizierung, ob das vorherbestimmte Ereignis erzeugt wird, basierend auf dem Ergebnis der Überwachung; und
Ausführung einer Aktion für den On-Chip-Speicher, bezogen auf das erzeugte Ereignis.

10. Verfahren nach Anspruch 6, das des Weiteren Folgendes umfasst:

Zuweisung der Speicherfläche zu der mindestens einen IP, basierend auf Zuweisungsinformationen, die entsprechend jeder IP im Voraus definiert werden,

wobei die Zuweisungsinformationen mindestens eine der Folgenden umfassen:

Informationen, die einen Vorrang einer Zuweisungsfläche anzeigen, Informationen, die einen Typ der Zuweisungsfläche anzeigen und Informationen, die eine Größe der Zuweisungsfläche anzeigen, und wobei der Typ der Zuweisungsfläche eine gewidmete Fläche und/oder eine normale Fläche umfasst.

11. Elektronische Vorrichtung mit dem On-Chip-Speicher, wobei der On-Chip-Speicher Folgendes umfasst:

eine Menge an IP;

einen Speicher, der eine Speicherfläche umfasst; und

einen Prozessor, der mit dem Speicher verbunden ist,

**dadurch gekennzeichnet, dass** der Prozessor konfiguriert ist, um:

die Latenz eines Speicherverkehrs für mindestens eine IP aus der Vielzahl von IP zu überwachen, und eine Verwendung einer Speicherfläche zu kontrollieren, die der mindestens einen IP entspricht, ob ein Unterschied zwischen einem Latenzschwellenwert, der der mindestens einen IP entspricht, und einer beobachteten Latenz der mindestens einen IP kleiner als ein vorherbestimmter Wert ist, basierend auf einer Operationstabelle mit Informationen für die mindestens eine IP aus der Vielzahl von IP.

12. Elektronische Vorrichtung nach Anspruch 11, wobei mindestens eines der Folgenden gilt:

der Prozessor ist des Weiteren konfiguriert, um einige oder alle Daten vorzuladen, bezogen auf mindestens eine IP aus der Vielzahl von IP, auf einer Vorladefläche, die in der Speicherfläche im Voraus konfiguriert ist; und der Prozessor ist des Weiteren konfiguriert, um ein Prefetch auf der Speicherfläche auszuführen, basierend auf einer Speicheranforderung, die von der mindestens einen IP verwendet wird.

13. Elektronische Vorrichtung nach Anspruch 11, wobei der Prozessor des Weiteren konfiguriert ist, um:

zu identifizieren, ob ein vorherbestimmtes Ereignis erzeugt wird, und eine Aktion für den On-Chip-Speicher auszuführen, bezogen auf das erzeugte Ereignis.

14. Elektronische Vorrichtung nach Anspruch 13, wobei die Aktion für den On-Chip-Speicher mindestens eine der Folgenden umfasst: Veränderung einer Vorladung einer IP, bezogen auf das erzeugte Ereignis, eine Zuweisung der Speicherfläche zu der mindestens einen IP, eine Zuweisungsfreigabe der Speicherfläche von der mindestens einen IP, eine Aktivierung einer Prefetchleistung für die mindestens eine IP und eine Deaktivierung der Prefetchleistung für die mindestens eine IP.

15. Elektronische Vorrichtung nach Anspruch 13, wobei der Prozessor des Weiteren konfiguriert ist, um zu identifizieren, ob das erzeugte Ereignis erzeugt wird, basierend auf einem Ergebnis der Überwachung.


**Revendications**

1. Mémoire sur puce comprenant :

une pluralité de propriétés intellectuelles (IP) dessinées ;

une mémoire qui comprend une zone de stockage ; et

un processeur connecté à la mémoire,

**caractérisé en ce que** le processeur est configuré pour :

surveiller la latence d'un trafic de mémoire pour au moins une IP parmi la pluralité d'IP, et contrôler un usage d'une zone de stockage correspondant à l'au moins une IP, si la différence entre une valeur de seuil de latence qui correspond à l'au moins une IP et une latence surveillée de l'au moins une IP est inférieure à une valeur prédéterminée, sur la base d'un tableau d'opérations incluant des informations pour l'au moins une IP parmi la pluralité d'IP.

2. Mémoire sur puce selon la revendication 1, où au moins un parmi les éléments suivants s'applique :

le processeur est, en outre, configuré pour précharger une partie ou la totalité des données associées à au moins une IP parmi la pluralité d'IP dessinées sur une zone de précharge configurée à l'avance dans la zone de stockage, et

le processeur est, en outre, configuré pour effectuer une pré-lecture sur la zone de stockage sur la base d'une demande de mémoire utilisée par l'au moins une IP.

3.  Mémoire sur puce selon la revendication 1, où le processeur est, en outre, configuré pour :

    identifier si un événement prédéterminé est généré, et
    effectuer une action pour la mémoire sur puce associée à l'événement généré,
    où l'action pour la mémoire sur puce comprend au moins l'un parmi un changement d'une précharge d'une IP associée à l'événement généré, une allocation de la zone de stockage à l'IP, une libération d'allocation de la zone de stockage de l'IP, une activation d'une performance de pré-lecture pour l'IP, et une désactivation de la performance de pré-lecture pour l'IP.

4.  Mémoire sur puce selon la revendication 3, où le processeur est, en outre, configuré pour identifier si l'événement prédéterminé est généré sur la base du résultat de la surveillance.

5.  Mémoire sur puce selon la revendication 1, où le processeur est, en outre, configuré pour allouer la zone de stockage à l'au moins une IP sur la base des informations d'allocation définies au préalable en fonction de chaque IP, où les informations d'allocation comprennent au moins une information indiquant une priorité d'une zone d'allocation, une information indiquant un type de la zone d'allocation et une information indiquant une taille de la zone d'allocation, et où le type de la zone d'allocation comprend au moins l'une parmi une zone dédiée et une zone normale.

6.  Procédé de fonctionnement d'une mémoire sur puce incluant une pluralité de propriétés intellectuelles (IP) dessinées, **caractérisé en ce que** le procédé comprend :

    surveiller la latence d'un trafic de mémoire pour au moins une IP parmi la pluralité d' d'IP dessinées ; et
    contrôler un usage d'une zone de stockage incluse dans la mémoire sur puce correspondant à l'au moins une IP, si une différence entre une valeur de seuil de latence qui correspond à l'au moins une IP et une latence surveillée de l'au moins une IP est inférieure à une valeur prédéterminée, sur la base d'un tableau d'opérations incluant des informations pour l'au moins une IP parmi la pluralité d'IP.

7.  Procédé selon la revendication 6, où au moins un des éléments suivants s'applique :

    comprenant, en outre, précharger une partie ou la totalité des données associées à l'au moins une IP parmi la pluralité d'IP dessinées sur une zone de précharge configurée à l'avance dans une zone de stockage ; et
    comprenant, en outre, effectuer une pré-lecture sur la zone de stockage sur la base d'une demande de mémoire utilisée par l'au moins une IP.

8.  Procédé selon la revendication 6, comprenant en outre :

    identifier si un événement prédéterminé est généré ; et
    effectuer une action pour la mémoire sur puce associée à l'événement généré,
    où l'action pour la mémoire sur puce comprend au moins un parmi un changement d'une précharge d'une IP associée à l'événement généré, une allocation de la zone de stockage à l'IP, une libération d'allocation de la zone de stockage de l'IP, une activation d'une performance de pré-lecture pour l'IP, et une désactivation de la performance de pré-lecture pour l'IP.

9.  Procédé selon la revendication 6, où contrôler la zone de stockage comprend :

    identifier si l'événement prédéterminé est généré sur la base du résultat de la surveillance; et
    effectuer une action pour la mémoire sur puce associée à l'événement généré.

10. Procédé selon la revendication 6, comprenant en outre :

    allouer la zone de stockage à l'au moins une IP sur la base des informations d'allocation définies au préalable en fonction de chaque IP,

où les informations d'allocation comprennent au moins une information indiquant une priorité d'une zone d'allocation, une information qui indique un type de la zone d'allocation et une information qui indique une taille de la zone d'allocation, et où le type de la zone d'allocation comprend au moins l'une parmi une zone dédiée et une zone normale.

11. Dispositif électronique comprenant la mémoire sur puce où la mémoire sur puce comprend :

une pluralité de propriétés intellectuelles (IP) dessinées ;
une mémoire qui comprend une zone de stockage ; et
un processeur connecté à la mémoire,

**caractérisé en ce que** le processeur est configuré pour :

surveiller la latence d'un trafic de mémoire pour au moins une IP parmi la pluralité d'IP dessinées et contrôler un usage d'une zone de stockage correspondant à l'au moins une IP, si une différence entre une valeur de seuil de latence qui correspond à l'au moins une IP et une latence surveillée de l'au moins une IP est inférieure à une valeur prédéterminée, sur la base d'un tableau d'opérations incluant des informations pour l'au moins une IP parmi la pluralité d'IP.

12. Dispositif électronique selon la revendication 11, où au moins un des éléments suivants s'applique :

le processeur est, en outre, configuré pour précharger une partie ou la totalité des données associées à au moins une IP parmi la pluralité d'IP dessinées sur une zone de précharge configurée à l'avance dans la zone de stockage ; et
le processeur est, en outre, configuré pour effectuer un pré-lecture sur la zone de stockage sur la base d'une demande de mémoire utilisée par l'au moins une IP.

13. Dispositif électronique selon la revendication 11, où le processeur est, en outre, configuré pour :

identifier si un événement prédéterminé est généré, et
effectuer une action pour la mémoire sur puce associée à l'événement généré.

14. Dispositif électronique selon la revendication 13, où l'action pour la mémoire sur puce comprend au moins un parmi un changement d'une précharge d'une IP associée à l'événement généré, une allocation de la zone de stockage à l'au moins une IP, une libération d'allocation de la zone de stockage de l'au moins une IP, une activation d'une performance de pré-lecture pour l'au moins une IP, et une désactivation de la performance de pré-lecture pour l'au moins une IP.

15. Dispositif électronique selon la revendication 13, où le processeur est, en outre, configuré pour identifier si l'événement généré est généré sur la base d'un résultat de suivi.

FIG. 1

# FIG. 2

# FIG. 3

FIG. 4

1

AP System

| CPU | ISP | GPU |

| Codec | Display | DSP |

CP System

| CPU | DMA |

| DSP | MAC |

400

310 — AP MODULE

CP MODULE — 320

AP-CP One Chip

340 — MEMORY MODULE

MEMORY CONTROL UNIT — 330

3 — MEMORY

# FIG. 5

MEMORY MODULE — 330

ADDRESS FILTER — 520

CONTROL UNIT — 530

MEMORY — 510

TRAFFIC MONITORING UNIT — 537

ENGINE — 535

ALLOCATION TABLE — 531

OPERATION TABLE — 533

FIG. 6

600

| GID | Allocation size(KB) | Usage(KB) |
|---|---|---|
| A | 512 | |
| B | 1024 | 384 |
| . . . . | | |

FIG. 7

700

| GID | Priority | Allocation size[KB] | Dedicated Size[KB] | Usage[KB] |
|-----|----------|---------------------|--------------------|-----------|
| A | 1 | 512 | | |
| B | 0 | 1024 | 512 | 384 |
| .... | | | | |

FIG. 8A

810

| MEMORY | | | |
|---|---|---|---|
| AP CPU | AP Codec | Normal<br>(Not Dedicated) | CP<br>Preloaded<br>Real-Time<br>Area |

FIG. 8B

850

| MEMORY | | | | | | | |
|---|---|---|---|---|---|---|---|
| AP CPU | AP Codec | AP GPU | AP GPU<br>AP CPU<br>AP Codec | AP GPU | AP Display | CP<br>Preloaded<br>Real-Time<br>Area |

FIG. 9

900

| Index | Event | Usage | | | | Prefetch | | | |
|-------|-------|---|---|---|-----|---|---|---|-----|
| | | A | B | C | ... | A | B | C | ... |
| | | | | | | | | | |

FIG. 10

1000

| Index | Event | Usage | | | | Prefetch | | | |
|---|---|---|---|---|---|---|---|---|---|
| | | A | B | C | ⋯ | A | B | C | ⋯ |
| 0 | Init | Off | On | | | | Preload 0 (Start Addresss0, Offset0) | | |
| 1 | A Threshold x | On | On | | | On | Preload 1 (Start Addresss1, Offset1) | | |
| 2 | B Threshold y | Off | On | | | Off | Preload 2 (Start Addresss2, Offset2) | | |
| ⋯ | | | | | | | | | |

FIG. 11

1100

EP 2 983 105 B1

| Index | Event | Usage | | | | Prefetch | | | |
|-------|-------|-------|---|---|-----|-----|---|---|-----|
| | | A | B | C | ... | A | B | C | ... |
| 0 | Init | Off | On | | | | Preload 0 (Start Addresss0, Offset0) | | |
| 1 | A Threshold x | On | On (Preload1) | | | On | Off Preload 1 (Start Addresss1, Offset1) | | |
| 2 | B Threshold y | Off | On (Preload2 + Additional Allocation) | | | Off | On Preload 2 (Start Addresss2, Offset2) | | |
| ... | | | | | | | | | |

# FIG. 12

# FIG. 13

CP Code

Start Address 0

1310

Start Address 1

Offset 0

Real-Time Area

Offset 1

Start Address 2

Offset 2

1350

| ID | Address Area | Description |
|---|---|---|
| Preload 0 | Start Addresss 0, Offset 0 | ALL OF REAL TIME AREA |
| Preload 1 | Start Addresss 1, Offset 1 | TELEPHONE CALL RELATION |
| Preload 2 | Start Addresss 2, Offset 2 | DATA COMMUNICATION |

# FIG. 14

**1410**

MEMORY MODULE

Memory

Monitoring

Preload 1
Real-Time Area

TRAFFIC
MONITORING UNIT — 537

ENGINE
[CP] Off
[Disp] Off — 533

MEMORY CONTROL UNIT

340

**1420**

MEMORY MODULE

Memory

Monitoring

CP Area

Preload 0
Real-Time Area

TRAFFIC
MONITORING UNIT — 537

ENGINE
[CP] On
[Disp] Off — 533

MEMORY CONTROL UNIT

340

**1430**

MEMORY MODULE

Memory

Monitoring

Preload 1
Real-Time Area

AP Display

TRAFFIC
MONITORING UNIT — 537

ENGINE
[CP] Off
[Disp] On — 533

MEMORY CONTROL UNIT

340

EP 2 983 105 B1

# FIG. 15

LCD Screen — 1520

Line — 1521

Line — 1522

IT IS DISPLAYED ON SCREEN IN LINE UNIT

310 1510

AP MODULE

Display

AP System | Pixel Data

MEMORY MODULE

Memory

AP Display Area

ENGINE — 533

[CP] On
[Disp] Off

Prefetch Engine DRAM

MEMORY CONTROL UNIT
1340

FIG. 16

EP 2 983 105 B1

# FIG. 17

START

S110

PRELOAD

S120

Latency Monitoring

S130

NO ← N TIMES?

YES

S140

Thresold T-Latency ≤ Margin M? → NO

YES

S160

CHANGE PRELOAD AREA ← YES — IS PRELOAD AREA CHANGE NECESSARY? — S150

NO

S170

CONFIGURE MEMORY ACCORDING TO USAGE SCENARIO DEFINED IN OPERATION TABLE

END

## FIG. 18

```
                          ┌─────────┐
                          │  START  │
                          └────┬────┘
                               │                    S200
                          ◇────────────◇
       YES ───────────────  Non-used Cache Line
                             in Dedicated Area?
                          ◇────────────◇
                               │ NO        S205                            S210
                          ◇────────────◇                          ◇─────────────────◇
                             Usage <        ── YES ──              Find Candidate        ── YES ──
                             Allocation Size?                      Location in Normal Area with the same
                          ◇────────────◇                          Group ID?
                               │ NO        S235                    ◇─────────────────◇
                          ◇────────────◇                               │ NO        S215
       YES ───────────────  Non-used Cache Line                   ◇─────────────────◇
                             in Normal Area?                         Find Candidate Location   ── NO ──
                          ◇────────────◇                            in Dedicated Area?
                               │ NO        S240                    ◇─────────────────◇
                 S245                                                   │ YES
            ◇─────────────◇        ◇────────────◇
             Same Priority & Other  YES  NO  Lower Priority Cache Line
             Group Cache Line in                in Normal Area?
             Normal Area?                   ◇────────────◇
            ◇─────────────◇                      │ YES
                 │ NO    S250                ┌─────────────┐   S220
            ◇─────────────◇                  │ Select Victim │
             Find Candidate Location  YES    └──────┬──────┘
             with the same Group ID?
            ◇─────────────◇
                 │ NO
```

| | |
|---|---|
| Allocation the Cache Line on that location (S225) | Don't Allocation the cache Line Bypass the Request (S230) |

```
                          ┌─────────┐
                          │   END   │
                          └─────────┘
```

EP 2 983 105 B1

FIG. 19

1900

| | RESOLUTION | Frame (MB) | Display (@60FPS) | |
| --- | --- | --- | --- | --- |
| | | | SCREEN PROCESS UNIT (KB) | SCREEN PROCESS UNIT (us) |
| FHD | 1920*1080 | 7.9 | 7.5 | 15.4 |
| QHD | 2560*1440 | 14.1 | 10 | 11.6 |
| UHD | 3840*2160 | 31.6 | 15 | 7.7 |

FIG. 20

2000

| COMMUNICTION BANDWIDTH (Mbps) | DOWNLOAD TIME (MINUTE) | Size (GB) | Quality |
|---|---|---|---|
| 150 | 2.4 | 2.5 | 720P (100 MINUTES) |
| 130 | 2.7 | 5.6 | 1080P (100 MINUTES) |

**EP 2 983 105 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20030101307 A1
- US 7177985 B1